# EUROPEAN PATENT SPECIFICATION

(11) **EP 1 285 824 B1**
(45) Date of publication and mention of the grant of the patent: **02.11.2005**
(21) Application number: 02017392.8
(22) Date of filing: 02.08.2002
(51) Int. Cl.: B60R 22/22, B60R 22/24

(54) **Seat belt system for a vehicle**
Sicherheitsgurtsystem für ein Kraftfahrzeug
Système de ceinture de sécurité pour un véhicule

(30) Priority: 07.08.2001 JP 2001238623
(43) Date of publication of application: 26.02.2003
(73) Proprietor: Mazda Motor Corporation, Aki-gun, Hiroshima 735-8670 (JP)
(72) Inventor: Yamachi, Ippei, Aki-gun, Hiroshima 735-8670 (JP); Nakao, Hiroaki, Aki-gun, Hiroshima 735-8670 (JP); Fukushima, Masanobu, Aki-gun, Hiroshima 735-8670 (JP); Takeshita, Hiroaki, Aki-gun, Hiroshima 735-8670 (JP); Ohtsuka, Masashi, Aki-gun, Hiroshima 735-8670 (JP); Okugawa, Hiroshi, Aki-gun, Hiroshima 735-8670 (JP)
(74) Representative: Müller-Boré & Partner Patentanwälte

(56) References cited:
- EP-A- 0 543 706
- EP-A- 0 716 963
- PATENT ABSTRACTS OF JAPAN vol. 013, no. 133 (M-809), 4 April 1989 (1989-04-04) & JP 63 301146 A (OI SEISAKUSHO CO LTD;OTHERS: 01), 8 December 1988 (1988-12-08)

## Description

The present invention relates to a seat belt system for a vehicle, more particularly, to a seat belt system for a front seat of a vehicle adopting a so-called double-door structure, to a door equipped with such a seat belt system, and to a vehicle provided with such a door.

Conventionally, in a vehicle of a passenger car or like, a retractor for retracting a webbing, a shoulder anchor for slidably supporting the webbing above and outboard of a passenger, and a lap anchor for fixedly supporting the webbing below and outboard of the passenger, are disposed on a center pillar of a vehicle body for a three-point seat belt restraint configuration for a front seat. Meanwhile, with regard to a vehicle adopting a double door structure with no center pillar, a structure is known in which the retractor, the shoulder anchor, and the lap anchor for a seat belt system for a front seat are disposed in a rear door in consideration of convenience for rear passengers in ingress or in egress, as disclosed in Japanese Patent Publication No. 2001-105864.

In a case that the lap anchor is disposed in the center pillar of the body, the location of the lap anchor (or an anchor point) can be positioned below the lower edge of the door. In a case that the lap anchor is disposed in the rear door as described above, however, the lap anchor is inevitably positioned above the lower edge of the door so as not to impede the opening and closing motion of the rear door, which results in a higher location of the anchor point. This causes no problem for the passenger protection in a vehicle which provides a relatively higher hip point for the passenger, but may cause a problem in a vehicle which provides a relatively lower hip point for the passenger. That is, the higher anchor point may possibly be inadequate for the seat belt to protect the passenger, because the webbing restraints the passenger at relatively higher location with respect to the passenger.

In view of the problem above, an object of the present invention is to optimize a passenger protection performance of a seat belt system for a passenger in a front seat without impairing the convenience for rear passengers in ingress or in egress, particularly in a vehicle adopting a so-called double-door structure with no center pillar and providing the lower hip point for the passenger,

This object is solved according to the invention by a seat belt system according to Claim 1, by a door according to Claim 9, and by a vehicle according to Claim 10 Preferred embodiments of the present invention are subject of the dependent claims.

Thus, according to the present invention, a passenger protection performance of a seat belt system for a passenger in a front seat is optimized without impairing the convenience for rear passengers in ingress or in egress, particularly in a vehicle adopting a so-called double-door structure with no center pillar and providing the lower hip point for the passenger.

According to a preferred embodiment of the present invention, there is provided a seat belt system for a vehicle, for restraining an occupant in a first seat mounted in a passenger compartment of the vehicle, the vehicle including an opening formed on at least one side of a vehicular body, wherein the seat belt system comprises, a belt webbing, a retractor to be disposed at a door of the vehicle for retracting a first end of the belt webbing, a lap-anchor device to be disposed at or near the door of the vehicle for fixedly supporting the belt webbing preferably below and outboard of the first seat, wherein, the lap-anchor device includes an anchor bracket to which a second end of the belt webbing is connected, and which is provided with a engaging portion engagable with a engaged portion provided at the vehicular body preferably below the opening, the anchor bracket being movable between a first position, preferably above the lower edge of the door, where the anchor bracket substantially does not impede the opening and closing motion of the door and a second position, preferably below the lower edge of the opening, where the engaging portion engages or can engage the engaged portion when the door is closed, and a moving device for moving the anchor bracket between the first position and the second position.

Accordingly, the moving device moves the anchor bracket in the vertical direction between the first position and the second position. When the door is open, the anchor bracket is moved to the first position, so as not to impede the opening and closing motion of the door. On the other hand, when the door is closed, the anchor bracket is moved downwardly to engage the engaged portion, so that the second end of the belt webbing is fixed below the lower edge of the opening via the anchor bracket, thereby providing the optimized passenger protection performance of the seat belt system. In addition, when the engaging portion engages the engaged portion, the door and the body can share load transmitted from the belt webbing via the lap-anchor device and the engaged portion, which can prevent the deformation or damage to the door and the body to ensure the passenger restraint performance of the seat belt system.

Preferably, the moving device may comprise a biasing means, preferably a spring, for moving the anchor bracket from the second position to the first position, and a driving means, preferably a motor for moving the anchor bracket from the first position to the second position against the biasing force by the biasing means, preferably the spring. Alternatively, the moving device may comprise a biasing means, preferably a spring for moving the anchor bracket from the second position to the first position, wherein, the anchor bracket may be moved from the first position to the second position by tension of the belt webbing against the biasing force by the spring when the seat belt system is fastened.

Accordingly, when the door shifts from its closed state to its open state, the biasing force of the biasing means, preferably the spring quickly moves the anchor bracket to the first position. On the other hand, when the door shifts from its open state to its closed state, the anchor bracket slowly moves to engage the engaged portion because the biasing means, preferably the spring biases the anchor bracket toward the first position. The slow movement of the anchor bracket ensures that the engaging portion reliably engages the engaged portion. In addition, the movement of the anchor bracket is achieved with a small number of elements, which provides the space-saving and cost-reduction.

Preferably, the anchor bracket may be so constructed as to have a substantially linear movement component, preferably to slide, in or along significantly/substantially vertical direction. Alternatively, or additionally the anchor bracket may be so constructed as to have a pivotal movement component, preferably to pivotally move. Further preferably, the seat belt system may comprise a gear for transmitting a rotation of the driving means, preferably the motor, and a link, which is connected between the gear and the anchor bracket, for transforming the rotation of the gear into vertical movement of the anchor bracket.

Still further preferably, a seat belt system for a vehicle may further comprise a shoulder anchor to be disposed on the door, and a tongue and buckle set including a tongue, preferably slidably supported on the belt webbing, and a buckle to be fixed to the vehicular body inboard of the seat, wherein the belt webbing, the lap-anchor device, the shoulder anchor, and the tongue and buckle set may provide a three-point seat belt restraint configuration for the first seat when the tongue and the buckle are fastened and the engaging portion engages the engaged portion.

According to the present invention, there is further provided a door provided with a seat belt system according to the present invention or an embodiment thereof.

According to the present invention, there is still further provided a vehicle including an opening formed on at least one side of a vehicular body and a first door supported on the vehicular body at its trailing edge via at least one first hinge so as to swingably move between a first state where the first door closes at least a part of the opening and a second state where the first door opens the opening, wherein the first door is a door according to the present invention or an embodiment thereof.

According to a further preferred embodiment, the vehicle may comprise a second door disposed ahead of the first door with being swingably supported on the vehicle body at its leading edge via at least one second hinge, wherein the first door and the second door may cooperatively close the opening.

Preferably, the opening preferably may be a single opening continuously formed.

Accordingly, the first door and the second door constitute a double door configuration without a center-pillar, which attains the larger door opening for efficient use and enhanced openness of the opening.

Further preferably, the vehicle may furhter comprise a second seat mounted rearward of the first seat in the passenger compartment, wherein the seat belt system may be permitted to restrain an occupant in the first seat when the first door is in the first state.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view of a vehicle equipped with a seat belt system according to the present invention.
FIG. 2 is a vertical sectional view of a rear door and a seat belt system according to the first embodiment taken from the inboard side.
FIG. 3 is a side view of a lap anchor according to the first embodiment taken from the inboard side.
FIG. 4 is a perspective view of a lap anchor according to the second embodiment taken from the inboard side.
FIG. 5 is a partial side view and a partial elevational view of a lap anchor according to the second embodiment.
FIG. 6 is a partial side view and a partial elevational view of a lap anchor according to the third embodiment.

Preferred embodiments of the present invention will now be described with reference to the appended drawings.

Firstly, a body structure and a door structure will be described.

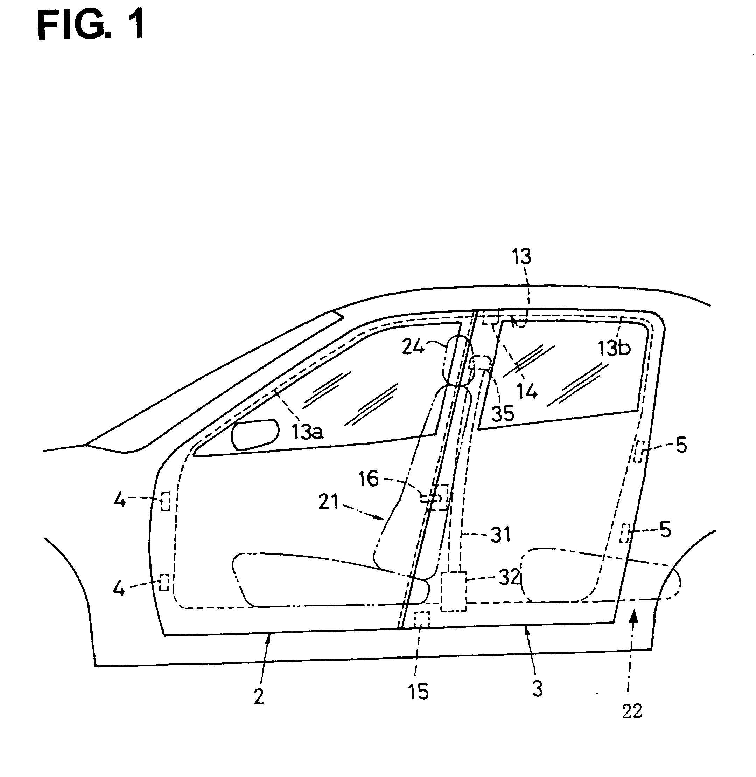

As shown in FIG. 1, a front seat 21 and a rear seat 22 are arranged in the longitudinal direction in a passenger compartment of a vehicle. At least one side of the vehicular body is formed with an ingress and egress opening 13a for the front seat passenger and an ingress and egress opening 13b for the rear seat passenger, through which the passengers can enter into and exit out of the passenger compartment, wherein the ingress and egress openings 13a, 13b may also at leaswt partly overlap.

As shown in FIG. 1, the front opening 13a can be opened and closed by a front door 2 pivotally supported on the body via hinges 4 preferably at its leading or forward edge or edge portion. Likewise, the rear opening 13b can be opened and closed by a rear door 3 pivotally supported on the body via hinges 5 preferably at its trailing or rear edge or edge portion. The openings and doors constitute a side door structure in a so-called double door configuration.

The openings 13a, 13b preferably form a continuous aperture so as to provide a body structure without a center pillar or B-pillar or B-post. The aperture can be cooperatively opened and closed by both the doors 2, 3 described above.

On the other hand, at the upper portion and the lower portion of the leading edge of the rear door 3, locking members 14, 15 are provided for locking the rear door 3 with the body, respectively. At the middle portion of the trailing edge of the front door 2, a locking member (not shown) is provided for locking a striker 16.

In this embodiment, the locking members 14, 15 are not allowed to release their locking function until the front door 2 is open. Therefore, in the double door configuration in this embodiment, the front door 2 is necessarily opened prior to the rear door 3, or the rear door 3 is allowed to open after the front door 2 opens.

Alternatively, the front door 2 and the rear door 3 may be constructed so as to independently open and close the corresponding portions of the continuous aperture. Alternatively or additionally, the front door 2 may have such a shape that it hinders the rear door 3 to be opened unless the front door 2 itself is at least partly opened.

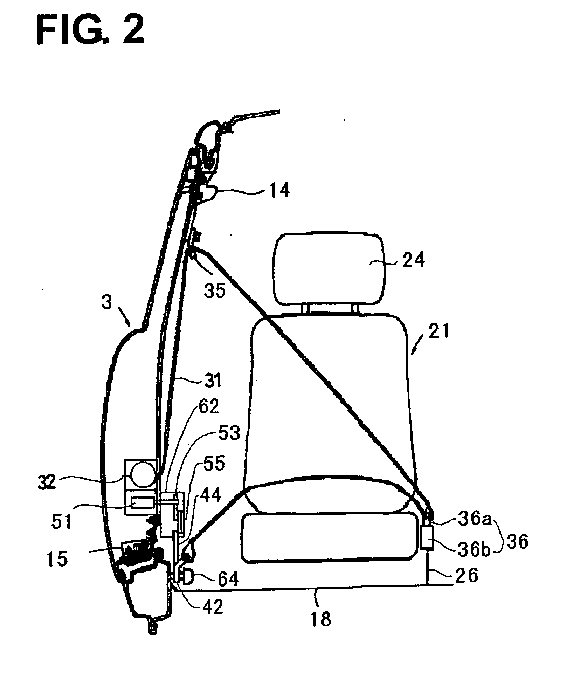

Described next is the construction and arrangement of a seat belt for the front seat.
As shown in FIG. 2, the seat belt system for the front seat comprises: a belt webbing 31 for restraining a passenger; a retractor 32 preferably disposed in the substantially lower portion of the rear door 3 for retracting and holding the webbing 31 in a vehicular collision; a shoulder anchor 35, serving as a first supporting point of the seat belt system and disposed on the upper portion of the rear door 3, for slidably supporting the webbing 31; a tongue and buckle set 36, serving as a second supporting point of the seat belt system, and slidably or movably supporting the webbing 31 below and inboard of the front seat passenger; and a lap anchor 42, serving as a third supporting point of the seat belt system, for fixedly supporting the webbing below and outboard of the front seat passenger.

The tongue and buckle set 36 consists of a tongue 36a and a buckle 36b, which can be releasably fastened or locked to into each other. When the tongue 36a and the buckle 36b are fastened, the tongue and buckle set 36 is fixed as a whole to the vehicle body, preferably a floor panel 18, via a bracket 26 so as to support the webbing 31 preferably substantially below and inboard of the front seat passenger.

The retractor 32 is preferably disposed in a front structural door-member of the rear door with the equivalent or substantially corresponding rigidity to that of a center pillar which would be otherwise provided, and configured to retract the webbing 31.

The shoulder anchor 35 is attached on the inboard side of the upper portion of the front structural door-member so as to substantially face or correspond to a head rest 24 or an upper portion of the front seat 21.

That is, the webbing 31 extends from the retractor 32 through a door trim (not shown) disposed on an inboard side of the front structural door-member to a passenger compartment, passes through a belt guide slit of the shoulder anchor 35 and the tongue 36a capable of engaging the buckle 36b of the tongue and buckle set 36 for fastening the seat belt, and reaches the lap anchor 42 at the front and lower portion of the rear door to which the end of the webbing 31 is connected.

The structure and action of the lap anchor will now be described for the following three preferred embodiments with reference to the drawings.

### (First embodiment)

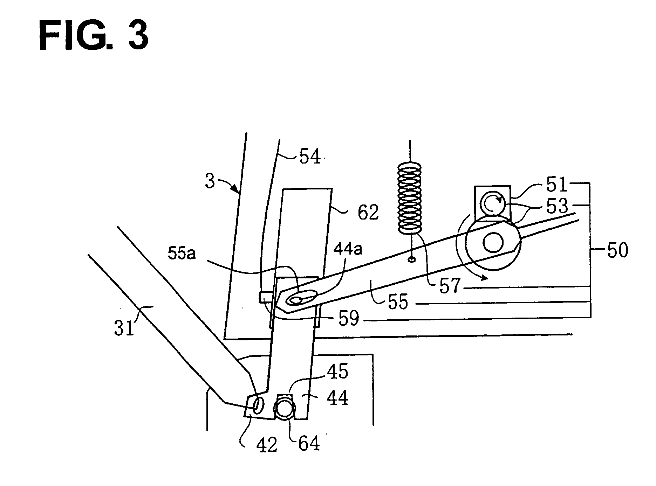

As shown in FIG. 2 and FIG. 3, the lap anchor 42 according to the first embodiment comprises: an anchor bracket 44 provided with the lap anchor 42; a supporting member 62 disposed on the rear door 3, for slidably or movably supporting the anchor bracket 44 substantially in or along the vertical direction; a moving mechanism (preferably an electrically moving mechanism) 50 for moving the anchor bracket 44 to such an upper position (as a preferred first position) that the bracket 44 substantially does not impede the opening and closing motion of the rear door 3 while the rear door 3 is being open or closed, and for moving the anchor bracket 44 to a lower position (as a preferred second position) when the rear door 3 is closed; and an anchor pin 64 disposed on the lower portion of the body below the rear door 3, with which a notch 45 formed at the lower end of the anchor bracket 44 engages when the rear door 3 is closed and the anchor bracket 44 is at the lower position.

Moreover, the moving mechanism (or the electrically moving mechanism) 50 preferably comprises: a motor 51 (as a preferred driving means) which produces a rotational force; a gear 53 for transmitting the rotational force by the motor 51 to a link 55; the link 55 which is rotated or pivoted by the transmitted rotational force from the motor 51, for causing a pin 44a provided on the anchor bracket 44 and loosely fitted into an oblong openings 55a at an end of the link 55 to slide within the opening 55a so as to move the anchor bracket 44 between the upper or first position and the lower or second position; a spring 57 (as a preferred biasing means) connected to the link 55 and producing upward biasing force thereon; and a stopper pin 59 interlocked or interlockable with a rear-door knob (not shown) via a cable 54 and disposed on the supporting member 62 so as to hold the anchor bracket 44 at the lower position where the bracket 44 engages the anchor pin 64 after the bracket 44 reaches the position.

The lap anchor 42 of the first embodiment according to the construction acts as will be described. When the rear door 3 shifts from its open state to its closed state, the change in the state of the rear door 3 is detected or sensed preferably in the form of a change in output voltage at a rear door switch (not shown) disposed in the rear door 3 or a buckle switch (not shown) disposed on the tongue and buckle set 36.

Based on the detection of the change in the output voltage at the rear door switch or the buckle switch, the rear door 3 is determined to have shifted to or toward the open state from the closed state, then preferably a confirmation timer (not shown) is activated. If an additional change in the output voltage at the rear door switch or the buckle switch is detected while the confirmation timer is measuring time, the rear door 3 is determined to have been restored to the closed state, then the control routine is cancelled and the position of the lap anchor 42 maintains unchanged.

On the other hand, if no change in the output voltage at the rear door switch nor the buckle switch is detected before a certain period of time expires under the measurement by the confirmation timer, the rear door 3 is confirmed to have shifted to the open state, then the motor 51 is rotated clockwise as shown in FIG. 3 (or in the direction indicated by an arrow in FIG. 3). The rotational force by the motor 51 is transmitted to the link 55 via the gear 53 and causes the link 55 to rotate counterclockwise (or in the direction indicated by an arrow in FIG. 3). Thus, the anchor bracket 44 is moved downwardly against the upward biasing force of the spring 57, because the anchor bracket 44 connected to an end of the link 55 is restricted by the supporting member 62 to move substantially only in or along the vertical direction.

The downward movement of the anchor bracket 44 terminates in such a manner that the notch 45 formed at the lower end of the anchor bracket 44 engages the anchor pin 64 fixed to the body below the rear door 3. At the substantially same time, the stopper pin 59 disposed on the supporting member 62 fits into the upper end of the anchor bracket 44.

In other words, as shown in FIG. 3, the anchor bracket 44 stops its downward movement, with its lower end being supported by the anchor pin 64 fixed to the body and its upper end being supported by the supporting member 62 and the stopper pin 59 disposed on the rear door 3. The motor 51 is deenergized preferably upon detecting lock current.

On the other hand, when the rear door 3 shifts from its closed state to or towards its open state, the operation of the rear door knob (not shown) causes the stopper pin 59 to move in such a direction as to disengage the anchor bracket 44 from the supporting member 62 via the cable 54 connecting the rear door knob with the stopper pin 59. Then, the anchor bracket 44 is quickly moved upwardly by the upward biasing force of the spring 57 disposed on the link 55 to such a location as to be restricted by the supporting member 62.

### (Second embodiment)

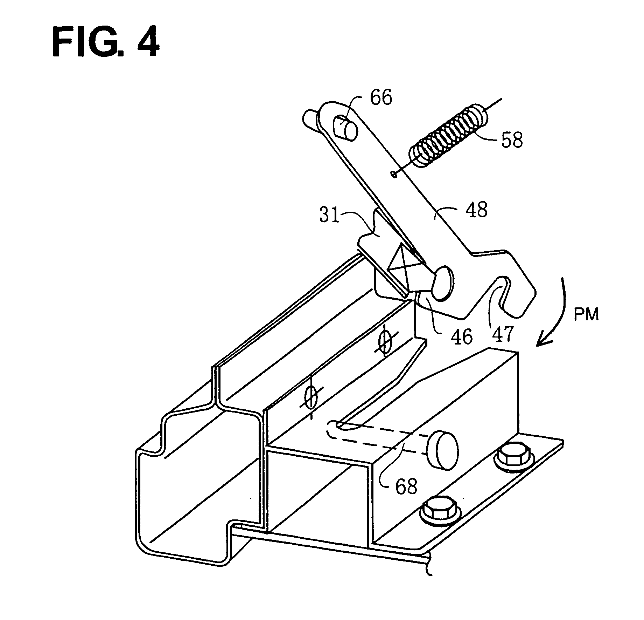

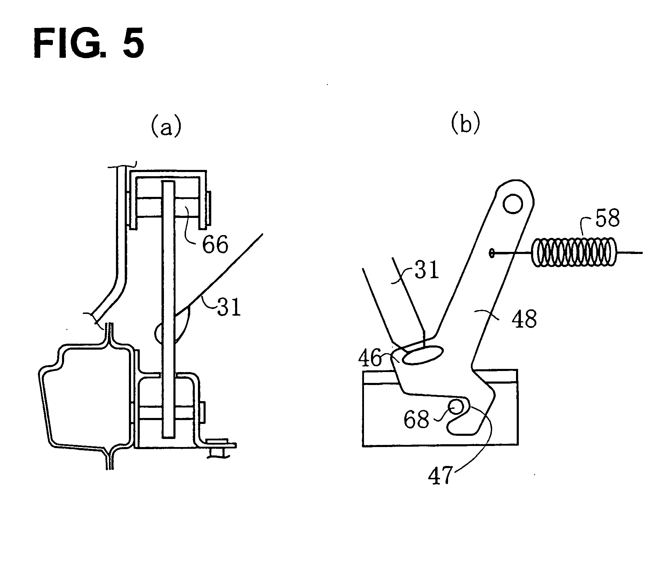

As shown in FIG. 4 and FIG. 5, the lap anchor according to the second embodiment comprises: an anchor link 48 integrally or unitarily formed with the lap anchor 46; a pivoting member 66 disposed on the rear door 3 and supporting the anchor link 48 in a pivotable manner in the vehicular longitudinal direction, for allowing the anchor link 48 to pivotally move in the vehicular forward and downward direction by tension of the webbing 31, when the rear door 3 is closed and the tongue and buckle set 36 is fastened; a spring 58 (as a preferred biasing means) connected to the anchor link 48 and producing biasing force in the vehicular rearward and upward direction for moving the anchor link 48 to such a position that the link 48 substantially does not impede the opening and closing motion of the rear door 3, when the rear door 3 is open and the tongue and buckle set 36 is released; and an anchor pin 68 fixed to the body substantially below the rear door 3, for bearing load acting on the webbing 31 on the body side after the anchor link 48 pivots to engage the pin 68, when the rear door 3 is substantially closed and the tongue and buckle set 36 is fastened.

The lap anchor 49 of the second embodiment according to the construction acts as will be described. Due to the biasing forcce of the spring 58 the anchor link 48 is held at a distance from the anchor pin 68 when the rear door 3 is open (first position shown in FIG. 4). After the rear door 3 shifts from its open state to or towards its closed state, a passenger applies tension on the webbing 31 for fastening the tongue and buckle set 36. The tension is transmitted to the lap anchor 46.

This causes the lap anchor 46 to start pivotal movement PM in the vehicular forward and downward direction about the pivoting member 66. Then, the lap anchor 46 moves in the vehicular forward and downward direction PM against biasing force in the vehicular rearward and upward direction produced by the spring 58.

The lap anchor 46 terminates its movement or pivoting action about the pivoting member 66 substantially in the vehicular forward and downward direction in such a manner that the anchor pin 68 engages a notch 47 formed at the lower portion of the anchor link 48 integral or unitary with the lap anchor 46 (second position shown in FIG. 5(b)).

When the webbing 31 spans from the retractor 32 to the lap anchor 46 via the shoulder anchor 35 and the tongue and buckle set 36, the retractor 32 applies tension to the lap anchor 46 through the webbing 31, which maintains the engagement between the anchor link 48 and the anchor pin 68.

On the other hand, when the tongue 36a is released from the buckle 36b of the tongue and buckle set 36 before the rear door 3 shifts from its closed state to its open state, the webbing 31 becomes substantially free from tension, so that biasing force by the spring 58 in the vehicular rearward and upward direction takes over, causing the anchor link 48 being positioned in the second position (FIG. 5(b)) to quickly pivot about the pivoting member 66 and to move in the vehicular rearward and upward direction towards the first position (FIG. 4).

### (Third embodiment)

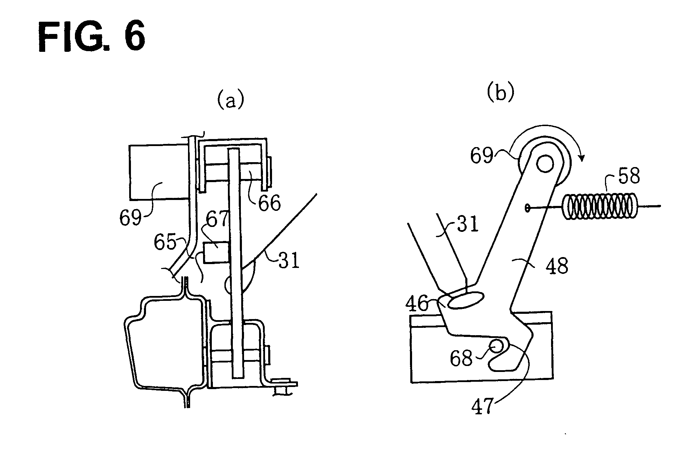

As shown in FIG. 6, a lap anchor according to the third embodiment comprises: a motor 69 (as a preferred driving means) connected to the pivoting member 66, for allowing the pivoting member to pivotally move; and a stopper mechanism 67 for retaining the anchor link 48 at an engaging position with the anchor pin 68, which are added to the structure of the second embodiment.

In the lap anchor 46 of the second embodiment, the passenger or the retractor 32 apply or applies tension to cause the pivotal movement of the anchor link 48. According to the structure in the third embodiment, however, similar to the motor control of the first embodiment, a change in the state of the rear door 3 is detected preferably in the form of a change in output voltage at a rear door switch (not shown) disposed in the rear door 3 or a buckle switch (not shown) disposed on the tongue and buckle set 36 or a similar detecting means, then the motor 69 is rotated clockwise as shown in FIG. 6(b) (or in the direction indicated by an arrow in FIG. 6) after the rear door 3 is confirmed to have shifted from the open state to the closed state. As a result, the anchor link 48 connected to the pivoting member 66 moves in the vehicular forward and downward direction against biasing force by the spring 58 in the vehicular rearward and upward direction.

The vehicular forward and downward movement of the anchor link 48 terminates in such a manner that the notch 47 formed at the lower end of the anchor link 48 integral or unitary with the lap anchor 46 engages the anchor pin 68 fixed to the body below the rear door 3 (second position). At the same time, similar to the first embodiment, the stopper mechanism 67 retains the anchor link 48 at the position.

On the other hand, when the rear door 3 shifts from its closed state to or towards its open state, similar to the first embodiment, the operation of the rear-door knob (not shown) causes the stopper mechanism 67 to release the retention of the anchor link 48 via the cable 65 connecting the rear-door knob with the stopper mechanism 67. Then, the anchor link 48 is quickly rotated about the pivoting member 66 to move in the vehicular rearward and upward direction toward the first position by the vehicular rearward and preferably upward biasing force of the spring 58 disposed on the anchor link 48.

According to the preferred embodiments described above, when the rear door 3 shifts from its open state to its closed state and the tongue 36a engages the buckle 36b of the tongue and buckle set 36, the lap anchor 42 in the first embodiment or the lap anchor 46 in the second and third embodiments automatically moves to the lower position without the operation by the passenger. Therefore, even in a vehicle providing a relatively lower hip point for the passenger, the webbing 31 restrains the passenger at the adequate height so as to optimize the passenger protection with the seat belt system.

In addition, when the seat belt is fastened after the rear door 3 shifts from its open state to or toward its closed state, load transmitted from the webbing 31 can be shared by the body and the rear door 3 through the supporting member 62 on the rear door 3 and the anchor pin 64 fixed on the body in the first embodiment, or through the pivoting member 66 on the rear door and anchor pin 68 fixed on the body in the second and third embodiments. This allows the rear door and the body to undergo less amount of load, which can prevent the deformation or damage to the rear door and the body to ensure the passenger restraint performance of the seat belt system.

Moreover, according to the first embodiment, when the rear door 3 shifts from its open state to or toward its closed state, the motor 51 preferably slowly lowers the anchor point, so as to ensure that the anchor bracket 44 engages the anchor pin 64. On the other hand, when the rear door 3 shifts from its closed state to its open state, the spring 57 quickly moves the anchor bracket 44 to such a position that the bracket 44 does not impede the opening motion of the rear door 3. Therefore, the rear door 3 freely opens and closes in a reliable manner, and the height of the anchor point is optimized when the seat belt is fastened, which ensures safety of the passenger.

Likewise, according to the other embodiments, when the rear door 3 shifts from its open state to its closed state and the tongue 36a engages the buckle 36b of the tongue and buckle set 36, the anchor point is slowly lowered by tension applied by the retractor 32 through the webbing 31 in the second embodiment, or by the rotational force of the motor 69 in the third embodiment, so as to ensure that the anchor link 48 engages the anchor pin 68. On the other hand, when the rear door 3 shifts from its closed state to its open state after the tongue 36a is released from the buckle 36b of the tongue and buckle set 36, the spring 58 quickly moves the anchor link 48 to such a position that the link 48 does not impede the opening movement of the rear door 3. Therefore, the rear door 3 freely opens and closes in a reliable manner, and the height of the anchor point is optimized when the seat belt is fastened, which ensures safety of the passenger.

Additionally, the movement of the lap anchor is achieved with a small number of elements: the driving means, preferably the motor 51, the gear 53, the link 55, the spring 57, and the stopper pin 59 in the first embodiment; the pivoting member 66 and the spring 58 in the second embodiment; and, the pivoting member 66, the spring 58, the motor 69, and the stopper mechanism 67 in the third embodiment. This achieves the space-saving and cost-reduction.

Accordingly, there is provided a seat belt system for a vehicle, for restraining an occupant in a first seat mounted in a passenger compartment of the vehicle, the vehicle including an opening formed on at least one side of a vehicular body, wherein the seat belt system. The seat belt system comprises a belt webbing 31, a retractor to be disposed at a door 3 of the vehicle for retracting a first end of said belt webbing 31, and a lap-anchor means 42 to be disposed at the door 3 of the vehicle for fixedly supporting said belt webbing 31 below and outboard of the first seat. The lap-anchor means 42 includes an anchor bracket and a moving device. The anchor bracket 44 is connected with a second end of said belt webbing 31, and provided with a engaging portion 45 engagable with a engaged portion 64 provided at the vehicular body below the opening 13. The anchor bracket 44 is also movable between a first position above the lower edge of the door 3 where said anchor bracket 44 does not impede the opening and closing motion of the door 3 and a second position below the lower edge of the opening 13 where said engaging portion 45 engages the engaged portion 64 when the door 3 is closed. The moving means 51, 57 moves said anchor bracket 44 between the first position and the second position.

It would be obvious that the present invention is not limited to the preferred embodiments described above but various changes and modifications may be made without departing from the present invention as defined in the claims. For instance, although the first embodiment uses the motor 51 as the moving mechanism 50 for moving the lap anchor 42, a hydraulic system or other mechanisms may be used as the mechanism 50.

## Claims

1. A seat belt system for a vehicle, for restraining an occupant in a first seat (21) mounted in a passenger compartment of the vehicle, the vehicle including an opening (13) formed on at least one side of a vehicular body, wherein the seat belt system comprises,
a belt webbing (31),
a retractor (32) to be disposed at or near a door (3) of the vehicle for retracting a first end of said belt webbing (31), and
a lap-anchor means (42; 46) to be disposed at or near the door (3) of the vehicle for fixedly supporting said belt webbing (31) below and outboard of the first seat (21), **characterized in that**
said lap-anchor means (42; 46) includes
an anchor bracket (44; 48) to which a second end of said belt webbing (31) is connected, and which is provided with an engaging portion (45; 47) engagable with an engaged portion (64; 68) provided at the vehicular body below the opening (13), said anchor bracket (44; 48) being movable between a first position, where said anchor bracket (44; 48) does not impede the opening and closing motion of the door (3) and a second position, where said engaging portion (45; 47) engages the engaged portion (64; 68) when the door (3) is closed, and
a moving means (51, 57; 58; 69) for moving said anchor bracket (44; 48) between the first position and the second position.

2. A seat belt system for a vehicle as defined in Claim 1, wherein the first position ist above the lower edge of the door (3) and/or the second position is below the lower edge of the opening (13).

3. A seat belt system for a vehicle as defined in Claims 1 or 2, wherein said moving means (51, 57; 58; 69) comprises:
a biasing means (57; 58) for moving said anchor bracket (44; 48) from the second position to the first position, and
a driving means (51; 69) for moving said anchor bracket (44; 48) from the first position to the second position against the biasing force by said biasing means(57; 58).

4. A seat belt system for a vehicle as defined in Claims 1 or 2, wherein said moving means (51, 57; 58; 69) comprises:
a biasing means (57; 58) for moving said anchor bracket (44; 48) from the second position to the first position, wherein,
said anchor bracket (44; 48) is moved from the first position to the second position by tension of said belt webbing (31) against the biasing force by said biasing means (57; 58) when said seat belt system is fastened.

5. A seat belt system for a vehicle as defined in at least one of preceding claims, wherein said anchor bracket (44; 48) is so constructed as to have a substantially linear movement component, in substantially vertical direction.

6. A seat belt system for a vehicle as defined in at least one of the preceding claims, wherein said anchor bracket (44; 48) is so constructed as to have a pivotal movement copmponent.

7. A seat belt system for a vehicle as defined in one of the preceding claims and Claim 2, further comprising:
a gear (53) for transmitting a rotation of said driving means (51; 69), and
a link (55), which is connected between said gear (53) and said anchor bracket (44; 48), for transforming the rotation of said gear (53) into vertical movement of said anchor bracket (44; 48).

8. A seat belt system for a vehicle as defined in at least one of preceding claims, further comprising:
a shoulder anchor (35) to be disposed on the door (3), and
a tongue and buckle set (36) including a tongue (36a) and a buckle (36b) to be fixed to the vehicular body inboard of the first seat (21),
wherein said belt webbing (31), said lap-anchor means (42; 46), said shoulder anchor (35), and said tongue and buckle set (36) provide a three-point seat belt restraint configuration for the first seat (21) when the tongue (36a) and the buckle (36b) are fastened and said engaging portion (45; 47) engages the engaged portion (64; 68).

9. A door (3) provided with a seat belt system according to at least one of the preceding claims.

10. A vehicle including an opening (13) formed on at least one side of a vehicular body and a first door (3) supported on the vehicular body at its trailing edge via at least one first hinge (5) so as to swingably move between a first state where the first door (13) closes at least a part of the opening (13) and a second state where the first door (3) opens the opening (13), wherein said first door (3) is a door (3) according to Claim 9.

11. A vehicle as defined in claim 10, the vehicle comprising a second door (2) disposed ahead of the first door (3) with being swingably supported on the vehicle body at its leading edge via at least one second hinge (4), wherein the first door (3) and the second door (2) cooperatively close the opening (13).

12. A vehicle as defined in claim 10 or 11, wherein the opening (13) is a single opening continuously formed.

13. A vehicle as defined in Claim 10, 11 or 12, further comprising a second seat (22) mounted rearward of the first seat (21) in the passenger compartment, wherein said seat belt system is permitted to restrain an occupant in the first seat (21) when the first door (3) is in the first state.

## Patentansprüche

1. Sicherheitsgurtsystem für ein Fahrzeug bzw. Kraftfahrzeug zum Zurückhalten eines Insassen in einem ersten Sitz (21), welcher in einem Fahrgastabteil des Fahrzeugs montiert bzw. angeordnet ist, wobei das Fahrzeug eine Öffnung (13) beinhaltet, welche an wenigstens einer Seite einer Fahrzeug-Karosserie bzw. eines Fahrzeugkörpers ausgebildet ist, wobei das Sitzgurt- bzw. Sicherheitsgurtsystem umfaßt:
ein Gurtband (31),
eine Rückholeinrichtung (32), welche an oder nahe einer Tür (3) des Fahrzeugs anzuordnen ist, um ein erstes Ende des Gurtbands (31) zurückzuziehen, und Schoß- bzw. End-Verankerungsmittel (42; 46), welche an oder nahe der Tür (3) des Kraftfahrzeugs anzuordnen sind, für ein fixiertes Abstützen des Gurtbands (31) unterhalb und außerhalb des ersten Sitzes (21), **dadurch gekennzeichnet, daß**
die Schoß-Verankerungsmittel (42; 46) beinhalten
eine Ankerklammer bzw. -halterung bzw. -stütze (44; 48), mit welcher ein zweites Ende des Gurtbands (31) verbunden ist und welche mit einem eingreifenden bzw. Eingriffsabschnitt (45; 47) versehen ist, welcher mit einem ergriffenen Abschnitt (64; 68) in Eingriff bringbar ist, welcher an der Fahrzeugkarosserie unterhalb der Öffnung (13) vorgesehen ist, wobei die Ankerklammer bzw. der Ankerträger (44; 48) zwischen einer ersten Position, wo die Ankerklammer (44; 48) nicht die Öffnungs- und Schließbewegung der Tür (3) beeinträchtigt bzw. behindert, und einer zweiten Position bewegbar ist, wo der eingreifende Abschnitt (45; 47) den ergriffenen Abschnitt (64; 68) ergreift, wenn die Tür (3) geschlossen ist, und
Bewegungsmittel (51, 57; 58; 69) zum Bewegen der Ankerklammer (44; 48) zwischen der ersten Position und der zweiten Position.

2. Sicherheitsgurtsystem für ein Fahrzeug nach Anspruch 1, wobei sich die erste Position oberhalb des unteren Rands bzw. der unteren Kante der Tür (3) befindet und/oder sich die zweite Position unterhalb der unteren Kante der Öffnung (13) befindet.

3. Sicherheitsgurtsystem für ein Fahrzeug nach Anspruch 1 oder 2, wobei die Bewegungsmittel (51, 57; 58; 69) umfassen:
beaufschlagende bzw. Vorspannmittel (57; 58) zum Bewegen der Ankerklammer (44; 48) von der zweiten Position zu der ersten Position, und
Antriebsmittel (51; 69) zum Bewegen der Ankerklammer (44; 48) von der ersten Position zu der zweiten Position gegen die beaufschlagende bzw. Vorspannkraft durch die Vorspannmittel (57; 58).

4. Sicherheitsgurtsystem für ein Fahrzeug nach Anspruch 1 oder 2, wobei die Bewegungsmittel (51, 57; 58; 69) umfassen:
Vorspannmittel (57; 58) zum Bewegen der Ankerklammer (44; 48) von der zweiten Position zu der ersten Position, wobei
die Ankerklammer (44; 48) von der ersten Position zu der zweiten Position durch eine Spannung des Gurtbands (31) gegen die Vorspannkraft durch die Vorspannmittel (57; 58) bewegt ist bzw. wird, wenn das Sicherheitsgurtsystem festgelegt wird.

5. Sicherheitsgurtsystem für ein Fahrzeug nach wenigstens einem der vorangehenden Ansprüche, wobei die Ankerklammer (44; 48) so konstruiert ist, um eine im wesentlichen lineare Bewegungskomponente in einer im wesentlichen vertikalen Richtung aufzuweisen.

6. Sicherheitsgurtsystem für ein Fahrzeug nach wenigstens einem der vorangehenden Ansprüche, wobei die Ankerklammer (44; 48) so konstruiert ist, um eine Schwenkbewegungs-Komponente aufzuweisen.

7. Sicherheitsgurtsystem für ein Fahrzeug nach einem der vorangehenden Ansprüche und Anspruch 2, weiters umfassend:
ein Ritzel bzw. Getriebe (53) zum Übertragen einer Rotation der Antriebsmittel (51; 69), und
eine Verbindung bzw. Kopplung (55), welche zwischen dem Ritzel (53) und der Ankerklammer (44; 48) verbunden bzw. angeschlossen ist, zum Übertragen der Rotation bzw. Drehbewegung des Ritzels (53) in eine vertikale Bewegung der Ankerklammer (44; 48).

8. Sicherheitsgurtsystem für ein Fahrzeug nach wenigstens einem der vorangehenden Ansprüche, weiters umfassend:
einen Schulteranker (35), welcher an der Tür (3) anzuordnen ist, und
einen Zungen- und Verschluß- bzw. Schnallen-Satz (36), welcher eine Zunge (36a) und einen Verschluß bzw. eine Schnalle (36b) beinhaltet, um an der Fahrzeugkarosserie einwärts des ersten Sitzes (21) festgelegt zu sein bzw. zu werden,
wobei das Gurtband (31), die Schoß-Verankerungsmittel (42; 46), der Schulteranker (35) und der Zungen- und Schnallen-Satz (36) eine Dreipunkt-Sicherheitsgurt-Rückhaltekonfiguration für den ersten Sitz (21) zur Verfügung stellen, wenn die Zunge (36a) und die Schnalle (36b) festgelegt sind und der eingreifende Abschnitt (45; 47) den ergriffenen Abschnitt (64; 68) ergreift.

9. Tür (3), welche mit einem Sicherheitsgurtsystem gemäß wenigstens einem der vorangehenden Ansprüche versehen ist.

10. Fahrzeug, welches eine Öffnung (13) beinhaltet, welche an wenigstens einer Seite einer Fahrzeugkarosserie ausgebildet ist, und eine erste Tür (3) beinhaltet, welche an der Fahrzeugkarosserie an ihrem nachlaufenden Rand über wenigstens ein erstes Gelenk (5) abgestützt bzw. getragen ist, um sich schwenkbar zwischen einem ersten Zustand, wo die erste Tür (13) wenigstens einen Teil der Öffnung (13) schließt, und einem zweiten Zustand zu bewegen, wo die erste Tür (3) die Öffnung (13) öffnet, wobei die erste Tür (3) eine Tür (3) gemäß Anspruch 9 ist.

11. Fahrzeug nach Anspruch 10, wobei das Fahrzeug eine zweite Tür (2) umfaßt, welche vor der ersten Tür (3) angeordnet ist, wobei sie schwenkbar an der Fahrzeugkarosserie an ihrem vorderen Rand bzw. Kante über wenigstens ein zweites Gelenk (4) abgestützt ist, wobei die erste Tür (3) und die zweite Tür (2) zusammenwirkend die Öffnung (13) schließen.

12. Fahrzeug nach Anspruch 10 oder 11, wobei die Öffnung (13) eine einzige Öffnung ist, welche kontinuierlich bzw. durchgehend ausgebildet ist.

13. Fahrzeug nach Anspruch 10, 11 oder 12, weiters umfassend einen zweiten Sitz (22), welcher hinter dem ersten Sitz (21) in dem Fahrgastabteil montiert bzw. angeordnet ist, wobei dem Sicherheitsgurtsystem erlaubt ist, einen Insassen in dem ersten Sitz (21) zurückzuhalten, wenn sich die erste Tür (3) in dem ersten Zustand befindet.

## Revendications

1. Système de ceinture de sécurité pour véhicule, destiné à retenir l'occupant d'un premier siège (21) monté dans le compartiment passager du véhicule, le véhicule comprenant une ouverture (13) ménagée sur au moins un côté du châssis du véhicule, le système de ceinture de sécurité comprenant :
une sangle (31) de ceinture,
un dispositif de rétraction (32) à disposer sur une portière (3) du véhicule ou à proximité de cette dernière de manière à rétracter une première extrémité de ladite sangle (31) de ceinture et
un moyen (42, 46) d'ancrage de sangle à disposer sur une portière (3) du véhicule ou à proximité de cette dernière de manière à soutenir fixement ladite sangle (31) de ceinture en dessous et à côté du premier siège (21), **caractérisé en ce que**
ledit moyen (42, 46) d'ancrage de sangle comprend :
un support d'ancrage (44, 48) auquel est reliée la deuxième extrémité de ladite sangle (31) de ceinture et doté d'une partie d'engagement (45, 47) qui peut engager une partie engagée (64, 68) prévue sur le châssis du véhicule en dessous de l'ouverture (13), ledit support d'ancrage (44, 48) pouvant être déplacé entre une première position dans laquelle ledit support d'ancrage (44, 48) n'empêche pas le déplacement d'ouverture et de fermeture de la portière (3), et une deuxième position, dans laquelle ladite partie d'engagement (45, 47) engage la partie engagée (64, 68) lorsque la portière (3) est fermée, et
un moyen (51, 57, 58, 69) de déplacement qui déplace ledit support d'ancrage (44, 48) entre la première position et la deuxième position.

2. Système de ceinture de sécurité pour véhicule selon la revendication 1, dans lequel la première position est située au dessus du bord inférieur de la portière (3) et/ou dans lequel la deuxième position est située en dessous du bord inférieur de l'ouverture (13).

3. Système de ceinture de sécurité pour véhicule selon les revendications 1 ou 2, dans lequel ledit moyen (51, 57, 58, 69) de déplacement comprend :
un moyen de sollicitation (57, 58) qui déplace ledit support d'ancrage (44, 48) depuis la deuxième position jusque dans la première position et
un moyen d'entraînement (51, 69) qui déplace ledit support d'ancrage (44, 48) depuis la première position jusque dans la deuxième position en opposition à la force de sollicitation exercée par ledit moyen de sollicitation (57, 58).

4. Système de ceinture de sécurité pour véhicule selon les revendications 1 ou 2, dans lequel ledit moyen de déplacement (51, 57, 58, 69) comprend :
un moyen de sollicitation (57, 58) qui déplace ledit support d'ancrage (44, 48) depuis la deuxième position jusque dans la première position,
ledit support d'ancrage (44, 48) étant déplacé depuis la première position jusque dans la deuxième position par la traction de ladite sangle (31) de ceinture en opposition à la force de sollicitation exercée par ledit moyen de sollicitation (57, 58) lorsque ledit système de ceinture de sécurité est fixé.

5. Système de ceinture de sécurité pour véhicule selon au moins l'une des revendications précédentes, dans lequel ledit support d'ancrage (44, 48) est construit de telle manière qu'il présente une composante de déplacement essentiellement linéaire dans la direction essentiellement verticale.

6. Système de ceinture de sécurité pour véhicule selon au moins l'une des revendications précédentes, dans lequel ledit support d'ancrage (44, 48) est construit de telle manière qu'il présente une composante pivotante de déplacement.

7. Système de ceinture de sécurité pour véhicule selon l'une des revendications précédentes et selon la revendication 2, qui comprend en outre :
un engrenage (53) qui transmet la rotation dudit moyen d'entraînement (51, 69) et
une liaison (55) qui est reliée entre ledit engrenage (53) et ledit support d'ancrage (44, 48) de manière à transformer la rotation dudit engrenage (53) en un déplacement vertical dudit support d'ancrage (44, 48).

8. Système de ceinture de sécurité pour véhicule selon au moins l'une des revendications précédentes, qui comprend en outre :
un ancrage d'épaulement (35) à disposer sur la portière (3) et
un ensemble (36) de boucle et de verrou qui comprend une boucle (36a) et un verrou (36b) à fixer sur le châssis du véhicule dans le premier siège (21),
ladite sangle (31) de ceinture, ledit moyen (42, 46) d'ancrage de sangle, ledit ancrage d'épaulement (35) et ledit ensemble (36) de boucle et de verrou fournissant une configuration de retenue de ceinture de sécurité à trois points du premier siège (21) lorsque la boucle (36a) et le verrou (36b) sont fixés et que ladite partie d'engagement (45, 47) engage la partie engagée (64, 68).

9. Portière (3) dotée d'un système de ceinture de sécurité selon au moins l'une des revendications précédentes.

10. Véhicule qui comprend une ouverture (13) ménagée sur au moins un côté du châssis du véhicule et une première portière (3) soutenue sur le châssis du véhicule sur son bord arrière par l'intermédiaire d'au moins une première charnière (5) de manière à se déplacer par pivotement entre une première position dans laquelle la première portière (3) ferme au moins une partie de l'ouverture (13) et une deuxième position dans laquelle la première portière (3) ouvre l'ouverture (13), ladite première portière (3) étant une portière (3) selon la revendication 9.

11. Véhicule selon la revendication 10, le véhicule comprenant une deuxième portière (2) qui est disposée en avant de la première portière (3) et qui est soutenue à pivotement sur le châssis du véhicule sur son bord avant par l'intermédiaire d'au moins une deuxième charnière (4), la première portière (3) et la deuxième portière (2) fermant l'ouverture (13) en coopérant l'une avec l'autre.

12. Véhicule selon les revendications 10 ou 11, dans lequel l'ouverture (13) est une seule ouverture continue.

13. Véhicule selon les revendications 10, 11 ou 12, qui comprend en outre un deuxième siège (22) monté à l'arrière du premier siège (21) dans le compartiment des passagers, ledit système de ceinture de sécurité pouvant retenir l'occupant du premier siège (21) lorsque la première portière (3) se trouve dans la première position.
